(19) Europäisches Patentamt / European Patent Office / Office européen des brevets

(11) **EP 2 814 136 B1**

(12) **EUROPEAN PATENT SPECIFICATION**

(45) Date of publication and mention
of the grant of the patent:
**28.03.2018 Bulletin 2018/13**

(21) Application number: **12867960.2**

(22) Date of filing: **09.02.2012**

(51) Int Cl.:
*H02M 7/797* (2006.01)    *B60L 11/14* (2006.01)
*B60L 11/18* (2006.01)    *H02J 5/00* (2016.01)
*H02J 7/02* (2016.01)

(86) International application number:
**PCT/JP2012/052970**

(87) International publication number:
**WO 2013/118274 (15.08.2013 Gazette 2013/33)**

(54) **BIDIRECTIONAL CONTACTLESS POWER SUPPLY SYSTEM**

BIDIREKTIONALES KONTAKTLOSES STROMVERSORGUNGSSYSTEM

SYSTÈME BIDIRECTIONNEL D'ALIMENTATION ÉLECTRIQUE SANS CONTACT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.12.2014 Bulletin 2014/51**

(73) Proprietor: **Technova Inc.
Tokyo 100-0011 (JP)**

(72) Inventors:
• **ABE Shigeru
Saitama City
Saitama 338-8570 (JP)**
• **KANEKO Yasuyoshi
Saitama City
Saitama 338-8570 (JP)**
• **WATANABE Hiroshi
Saitama City
Saitama 338-8570 (JP)**
• **YASUDA Tomio
Tokyo 100-0011 (JP)**

(74) Representative: **Winter, Brandl, Fürniss, Hübner,
Röss, Kaiser, Polte - Partnerschaft mbB
Patent- und Rechtsanwaltskanzlei
Alois-Steinecker-Strasse 22
85354 Freising (DE)**

(56) References cited:
WO-A1-2007/029438    WO-A1-2010/062201
WO-A2-2012/005607    CN-A- 102 025 182
JP-A- 2011 045 195    JP-A- 2011 045 195
JP-A- 2011 176 914    US-A1- 2009 034 300
US-A1- 2010 096 926    US-A1- 2012 025 942

**Description**

TECHNICAL FIELD

The present invention relates to a bidirectional contactless power transfer system that supplies power in a contactless manner to a secondary battery installed in a moving body such as an electric vehicle. The present invention enables bidirectional power supply so that power stored in the secondary battery can be used in a power system or at home as necessary.

BACKGROUND ART

As a method for charging a secondary battery installed in an electrical vehicle or a plug-in hybrid vehicle, there exists: a method that transfers power from an external power supply to a vehicle via a charging cable; and a contactless power transfer method that supplies power from a primary coil (power transmission coil) to a secondary coil (power reception coil) by using electromagnetic induction between the power transmission coil and the power reception coil.

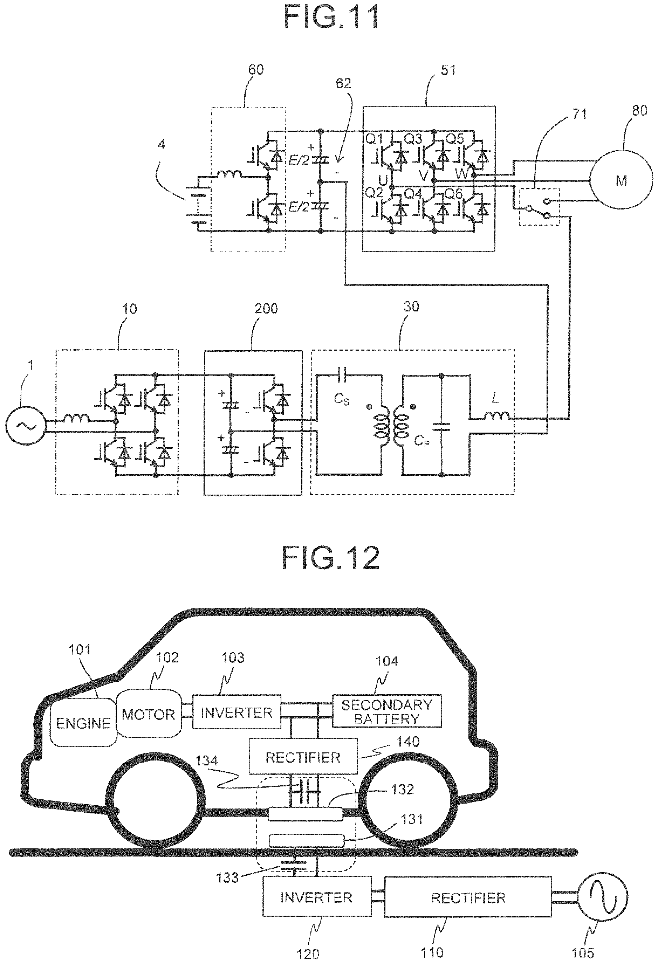

FIG. 12 schematically illustrates a contactless power transfer system for charging a secondary battery 104 of a plug-in hybrid vehicle.

The plug-in hybrid vehicle includes an engine 101 and a motor 102 as the drive source, and also includes a secondary battery 104 and an inverter 103. The secondary battery 104 is used as a power supply for the motor, and the inverter 103 converts alternating current of the secondary battery 104 into direct current and then supplies the current to the motor 102.

On the ground side, the contactless power transfer system that supplies power to the secondary battery 104 includes a rectifier 110, an inverter 120, a power transmission coil 131, and a series capacitor 133. The rectifier 110 converts alternating current of a commercial power supply 105 into direct current. The inverter 120 generates high-frequency alternating current from the direct current obtained by the conversion. The power transmission coil 131 serves as one side of a contactless power transfer transformer. The series capacitor 133 is connected to the power transmission coil 131 in series. On the vehicle side, the contactless power transfer system includes a power reception coil 132, a rectifier 140, and a parallel capacitor 134. The power reception coil 132 serves as the other side of the contactless power transfer transformer. The rectifier 140 converts alternating current into direct current for the secondary battery 104. The parallel capacitor 134 is interposed between and connected in parallel to the power reception coil 132 and the rectifier 140.

Hereinafter, a part interposed between the inverter 120 and the rectifier 140 and including the contactless power transfer transformer, in which the power transmission coil 131 and the power reception coil 132 are included, and the capacitors 133 and 134, will be referred to as a "contactless power transfer device" in the present description.

FIG. 13 illustrates a basic circuit of a contactless power transfer system described in Patent Literature 1 listed below. The rectifier 110 includes a rectifying element, and a smoothing capacitor that smoothes rectified current. The inverter 120, as has been generally known, includes: four main switches each formed of an insulated gate bipolar transistor (IGBT) or the like; four feedback diodes connected in inverse-parallel to the respective main switches; and a controller (not illustrated) that switches the main switches. In response to on and off operation of the main switches caused by control signals from the controller, the inverter 120 outputs alternating current having a rectangular waveform or a substantially sinusoidal waveform according to pulse-width control.

The primary coil 131, the secondary coil 132, the primary-side series capacitor 133, and the secondary-side parallel capacitor 134 constitute a contactless power transfer device 130. This method of connection used in the contactless power transfer device 130, where the capacitors 133 and 134 provides series connection for the primary side and parallel connection for the secondary side, is referred to as an "SP method".

The alternating current output from the contactless power transfer device 130 is rectified by the rectifier 140 that includes a rectifying element and a smoothing capacitor. Then, the current is supplied to the secondary battery 104.

As a connection method of the capacitor in the contactless power transfer device 130 other than the SP method, there is known an "SS method" where series capacitors are connected in the primary and secondary sides, a "PP method" where parallel capacitors are connected in the primary and secondary sides, and/or the like. In the case of the SP method, as described in Patent Literature 1 listed below, a transformer equivalent to an ideal transformer is provided when the capacity Cp of the secondary-side series capacitor 134 and the capacity Cs of the primary-side series capacitor are set in a manner described below. Such a transformer achieves high power supply efficiency and makes system designing easier.

Specifically, when it is denoted that: the number of windings of the primary coil 131 is $N_1$; the number of windings of the secondary coil 132 is $N_2$; the ratio of the numbers of windings is $a=N_1/N_2$; the input voltage of the primary side that is converted for the secondary side is $V'_{IN}$ ($=V_{IN}/a$); the input current is $I'_{IN}(=a \times I_{IN})$; the capacity reactance of a primary capacitor C is $x'_s(=x_s/a^2)$; a primary leakage reactance of primary winding is $x'_1(=x_1/a^2)$; an excitation reactance of the primary side is $x'_0(=x_0/a^2)$; the secondary leakage reactance is $x_2$; the capacitance reactance of the secondary-side capacitor is $x_P$; the output voltage is $V_2$; the output current is $I_{2L}$; the frequency of the high-frequency power supply 120 is $f_0$; and $\omega_0 = 2\pi f_0$, the capacitance Cp of the secondary-side parallel capacitor 134 is set so as to satisfy the following equation (expression 1).

$$1/(\omega_0 \times Cp) = x_P = x'_0 + x_2 \qquad \text{(expression 1)}$$

Further, the capacitance Cs ($=CS'/a^2$) of the primary-side series capacitor is set so as to satisfy the following equation (expression 2).

$$1/(\omega_0 \times Cs') = x'_S = (x'_0 \times x'_1 + x'_1 \times x_2 + x_2 \times x'_0)/(x'_0 + x_2) \qquad \text{(expression 2)}$$

In this case, the equivalent circuit of the contactless power transfer device employing the SP method is equivalent to an ideal transformer in which the ratio of the numbers of windings is b ($=x'_0/(x'_0 + x_2)$), and the following equations (expression 3) and (expression 4) hold.

$$V_2 = V'_{IN}/b \qquad \text{(expression 3)}$$

$$I_{2L} = bI'_{IN} \qquad \text{(expression 4)}$$

Recently, there is an increasing interest in "V2H" (vehicle to home) and "V2G" (vehicle to grid) by which excess power stored in a secondary battery of an electric vehicle (EV) is used at home and/or in a power grid.

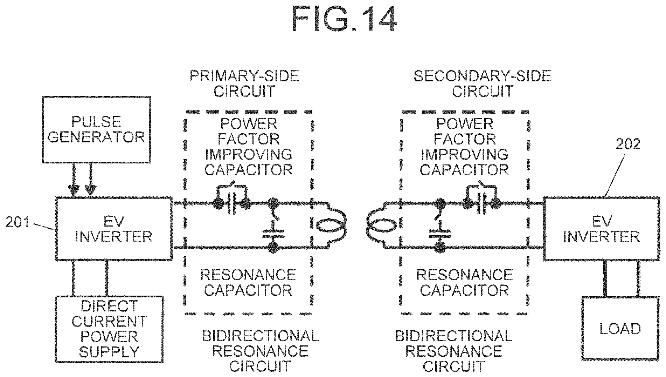

In response to such a trend, Nonpatent Literature 1 listed below addresses a technique to enable bidirectional power transfer in a contactless power transfer system. FIG. 14 illustrates a bidirectional contactless power transfer system disclosed in Nonpatent Literature 1. In this system, EV inverters 201 and 202 are connected to a primary-side circuit and a secondary-side circuit, respectively, of a contactless power transfer device.

When power is supplied from the primary side to the secondary side, the EV inverter 201 converts direct current from a DC power supply into alternating current. In the EV inverter 202, all of the main switches are maintained in an off state, and a rectifying bridge formed of feedback diodes rectifies alternating current output from the secondary-side circuit and supplies the rectified current to a load. In contrast, when power is supplied from the secondary side to the primary side, the EV inverter 202 converts direct current output from a load into alternating current, and the EV inverter 201, with all of the main switches thereof maintained in an off state, rectifies alternating current output from the primary-side circuit and supplies the rectified current to the DC power supply.

In the contactless power transfer device, the primary side and the secondary side both have: a series capacitor; a switch that short-circuits the two ends of the series capacitor; a parallel capacitor; and a switch that connects and disconnects the parallel capacitor. Then, when the power is transferred from the primary-side to the secondary-side, the switches are changed so that the series capacitor of the primary-side circuit and the parallel capacitor of the secondary-side circuit function. Further, when the power is transferred from the secondary-side to the primary-side, the switches are changed so that the series capacitor of the secondary-side circuit and the parallel capacitor of the primary-side circuit function.

CITATION LIST

Patent Literature

Patent Literature 1: Japanese Patent Application Laid-open No. 2011-45195
Patent Literature 2: US 2009/0034300 A1 20090205
Patent Literature 3: CN102025182 A 20110420

Nonpatent Literature

Nonpatent Literature 1: Nayuki, Fukushima, Gibo, Nemoto, and Ikeya, "Preliminary demonstrations of a bidirectional inductive power transfer system", CRIEPI (Central Research Institute of Electric Power Industry) Research Report H10007 (2011)

SUMMARY OF INVENTION

Problem to be Solved by the Invention

However, it is required for the method that bidirectionalize the contactless power transfer system by switching the circuits to introduce a switching control mechanism in the contactless power transfer device. Further, such a method requires an increased number of components in the contactless power transfer device. Thus, cost increase cannot be avoided. Furthermore, in order to substantially equalize voltage level of the power supplying side and voltage level of the power receiving side regardless of the power supply direction (whether the direction is G2V or V2G), it is required to largely control the voltages by an inverter and/or the like. This also increases the cost.

In making a contactless power transfer system bidirectional, it is required to minimize cost increase of a contactless power transfer device.

For that purpose, it is desired that a contactless power transfer device used in a unidirectional contactless power transfer system be minimally modified, that the numbers of capacitors and inductors be reduced, and that the same specifications as used for a power supply and a contactless power transfer transformer in a unidirectional case be used for those in a contactless case.

In making a contactless power transfer system bidirectional, it is also desirable that the system is configured to be able to maintain power supply efficiencies in both of the two directions at the maximum.

Furthermore, in making a contactless power transfer system bidirectional, it is also desired that voltages and currents at the power receiving side be easily controlled regardless of the power supply direction.

The present invention is made in view of the forgoing. It is an object of the present invention is to provide a bidirectional contactless power transfer system that has high bidirectional power transfer efficiency, can easily control voltage and current on the power receiving side, and can achieve low cost.

Means for Solving Problem

A bidirectional contactless power transfer system according to one aspect of the present invention comprises a contactless power transfer device that includes a first coil and a second coil spaced apart from the first coil. The bidirectional contactless power transfer system is supplied with electrical power from a primary-side circuit including the first coil to a secondary-side circuit including the second coil and from the secondary-side circuit to the primary-side circuit by effect of electromagnetic induction. The primary-side circuit in the contactless power transfer device connects to a first power converter having a function to convert direct current into alternating current and a function to convert alternating current into direct current. The first power converter connects to a second power converter having the function of converting direct current into alternating current and the function of converting alternating current into direct current, and the second power converter further connects to a commercial power supply. The secondary-side circuit in the contactless power transfer device connects to a third power converter having the function of converting direct current into alternating current and the function of converting alternating current into direct current, and the third power converter further connects to a direct current power supply, such as a secondary battery, of a moving body. When the power is transferred from the primary-side circuit to the secondary-side circuit in the contactless power transfer device, the second power converter converts alternating current of the commercial power supply into direct current, the first power converter converts the direct current into alternating current to supply the alternating current to the primary-side circuit, and the third power converter converts alternating current output from the secondary-side circuit into direct current to supply the direct current to the direct current power supply of the moving body. When the power is transferred from the secondary-side circuit to the primary-side circuit in the contactless power transfer device, the third power converter converts direct current output from the direct current power supply of the moving body into alternating current to supply the alternating current to the secondary-side circuit, the first power converter converts alternating current output from the primary-side circuit into direct current, and the second power converter converts the direct current into alternating current and supply the alternating current to the commercial power supply. Bidirectional power transfer is performed only by switching operation of the first power converter, the second power converter, and the third power converter.

In this bidirectional contactless power transfer system, G2V (Grid to Vehicle) and V2G can be executed only by switching operations of the first, second, and third power converters.

Further, according to another aspect of the present invention, the contactless power transfer device includes a first series capacitor connected to the first coil in series, a first parallel capacitor connected to the second coil in parallel, and a first inductor connected to the second coil in series.

In this bidirectional contactless power transfer system, bidirectional power transfer efficiencies are increased only by incorporating a series capacitor into the secondary side of a contactless power transfer device according to the SP method.

Further, according to still another aspect of the present invention, the contactless power transfer device may include a second parallel capacitor connected to the first coil in parallel, a second inductor connected to the first coil in series, and a second series capacitor connected to the second coil in series (hereinafter, this is referred to as a modification).

Since the power transfer is performed bidirectionally, it is possible to switch the primary side and the secondary side.

Further, according to still another aspect of the present invention, it is desirable that the value Cs of the first or the second series capacitor is set to

$$\mathrm{Cs}{\approx}1/\{(2\pi f0)^2{\times}L1\},$$

the value Cp of the first or the second parallel capacitor is set to

$$\mathrm{Cp}{\approx}1/\{(2\pi f0)^2{\times}L2\},$$

and
the value Ls of the first or the second series inductor is set to

$$\mathrm{Ls}{\approx}L2,$$

where f0 denotes a frequency of alternating current generated by the first power converter of when the power is transferred from the primary-side circuit to the secondary-side circuit in the contactless power transfer device as well as a frequency of alternating current generated by the third power converter of when the power is transferred from the secondary-side circuit to the primary-side circuit in the contactless power transfer device; L1 denotes a self inductance of the coil to which the first (the second in the modification) series capacitor is connected; and L2 denotes a self inductance of the coil to which the first (the second in the modification) parallel capacitor is connected.

By setting the value as described above, it becomes possible to perform bidirectional power transfer highly efficiently.

Further, according to still another aspect of the present invention, it is desirable that the value Cs of the first or the second series capacitor is set in the range of

$$\mathrm{Cs}0{\times}0.7{\leq}\mathrm{Cs}{\leq}\mathrm{Cs}0{\times}1.3,$$

the value Cp of the first or the second parallel capacitor is set in the range of

$$\mathrm{Cp}0{\times}0.7{\leq}\mathrm{Cp}{\leq}\mathrm{Cp}0{\times}1.3,$$

the value Ls of the first or the second series inductor is set in the range of

$$\mathrm{L}2{\times}0.7{\leq}\mathrm{Ls}{\leq}\mathrm{L}2{\times}1.3,$$

where $Cs0=1/\{(2\pi f0)^2{\times}L1\}$ and $Cp0=1/\{(2\pi f0)^2{\times}L2\}$.

With Cs, Cp, and Ls set in these ranges, power can be bidirectionally transferred highly efficiently, that is almost equivalent to that of a contactless power transfer system including a contactless power transfer device according to the SP method.

Further, according to still another aspect of the present invention, at least one of the first power converter and the third power converter may include: a switching unit arm including two switching units connected in series, each of the switching units being formed of a switching element and a diode connected in inverse-parallel to the switching element; and a capacitor arm connected to the switching unit arm in parallel and including two capacitors connected in series. Then, the primary-side circuit or the secondary-side circuit may be connected to a connection point between the two switching units of the switching unit arm and to a connection point between the two capacitors of the capacitor arm. If direct current is converted into alternating current, the at least one of the first power converter and the third power converter may operate as a half-bridge inverter. If alternating current is converted into direct current, the at least one of the first power converter and the third power converter may operate as a voltage doubler rectifier circuit.

This allows reduction in number of components of a power converter, and makes it possible to reduce power consumption and to increase power transfer efficiency.

Further, according to still another aspect of the present invention, the third power converter can be a three-phase voltage-type inverter, and a direct current side of the three-phase voltage-type inverter can be connected to the direct current power supply of the moving body, and a three-phase alternating current side of the three-phase voltage-type inverter can be connected, via a change-over switch, to a three-phase electric motor and the secondary-side circuit of the contactless power transfer device.

This makes it possible to use a three-phase voltage-type inverter originally included in an electric vehicle for driving an electric motor to perform bidirectional contactless power transfer.

Further, according to still another aspect of the present invention, if the three-phase voltage-type inverter is connected to the three-phase electric motor by the change-over switch, the three-phase voltage-type inverter operates as a three-phase voltage-type PWM inverter, and, if the three-phase voltage-type inverter is connected to the secondary-side circuit in the contactless power transfer device by the change-over switch, the three-phase voltage-type inverter operates as a single-phase rectangular wave inverter that outputs a single-phase rectangular wave.

Effect of the Invention

The bidirectional contactless power transfer system according to the present invention enables highly efficient bidirectional power transfer with no need to substantially modify the configuration of a contactless power transfer device that performs unidirectional power transfer. This makes it possible to minimize cost increase in making power transfer bidirectional.

BRIEF DESCRIPTION OF DRAWINGS

FIG. 1 is a circuit diagram of a bidirectional contactless power transfer system.
FIG. 2 is a diagram illustrating parameters for a verification experiment.
FIG. 3 is a diagram illustrating results of the verification experiment.
FIG. 4 is diagram illustrating a relationship between resistance loads and power supply efficiencies.
FIG. 5 is a diagram illustrating input and output waveforms.
FIG. 6 is a modified circuit diagram of FIG. 1.
FIG. 7 is a circuit diagram of a bidirectional contactless power transfer system according to a first embodiment of the present invention.
FIG. 8 is a modified circuit diagram of FIG. 7.
FIG. 9 is a circuit diagram of a bidirectional contactless power transfer system according to a second embodiment of the present invention.
FIG. 10 is a waveform of output voltages across terminals U and V of a voltage-type inverter in the circuit in FIG. 9.
FIG. 11 is a modified circuit diagram of FIG. 9.
FIG. 12 is a diagram illustrating a contactless power transfer system to a vehicle.

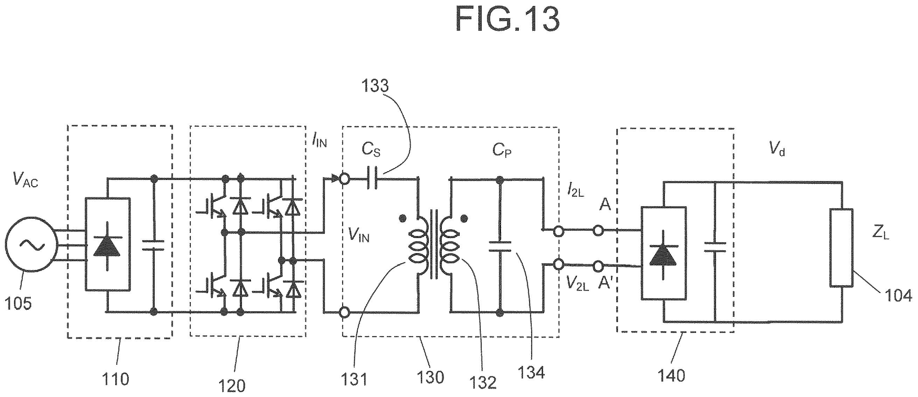

FIG. 13 is a basic circuit diagram of the contactless power transfer system in FIG. 12.
FIG. 14 is a diagram illustrating a conventional bidirectional contactless power transfer system.

MODES FOR CARRYING OUT THE INVENTION

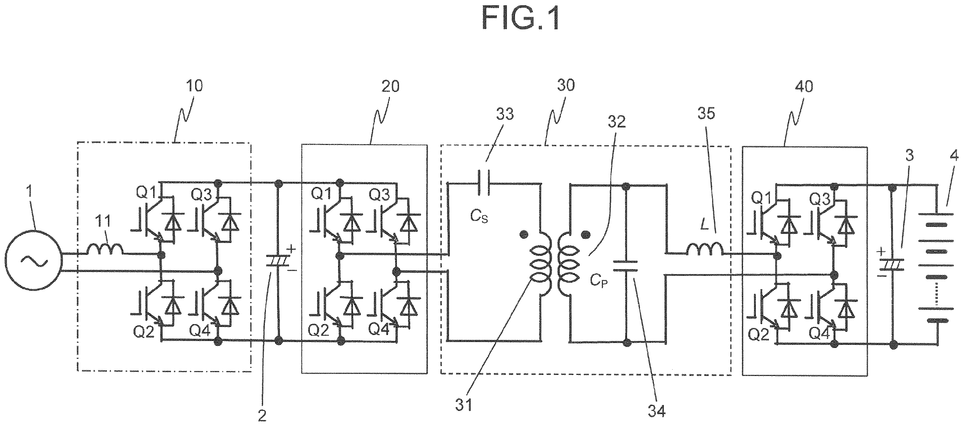

FIG. 1 illustrates a circuit configuration of a bidirectional contactless power transfer system. This system includes: a high power factor converter unit (referred to as a "second power converter" in the claims) 10 connected to a commercial power supply 1; a primary-side inverter unit (referred to as a "first power converter" in the claims) 20; a smoothing capacitor 2 interposed between the high power factor converter unit 10 and the inverter unit 20, and connected to the high power factor converter unit 10 and the inverter unit 20 in parallel; a contactless power transfer device 30, the primary side of the contactless power transfer device 30 being connected to the inverter unit 20; an inverter unit (referred to as a "third power converter" in the claims) 40 connected to the secondary side of the contactless power transfer device 30; a secondary battery 4 that stores power therein; and a smoothing capacitor 3 interposed between the inverter unit 40 and the secondary battery 4, and connected to the inverter unit 40 and the secondary battery 4 in parallel. The bidirectional contactless power transfer system further includes a controller, not illustrated, that performs switching among the high power factor converter unit 10, the inverter unit 20, and the inverter unit 40.

The high power factor converter unit 10, the inverter unit 20, and the inverter unit 40 each include: four switching units (Q1, Q2, Q3, Q4) each formed of a switching element, such as an IGBT; and a feedback diode connected in anti-parallel to the switching element. A switching unit arm in which Q1 and Q2 are connected to each other in series and a switching unit arm in which Q3 and Q4 are connected to each other in series are connected to each other in parallel. In the high power factor converter unit 10, a connection point between Q1 and Q2 in one of the switching unit arms is connected to the commercial power supply 1 via an inductor 11. Further, a connection point between Q3 and Q4 in other one of the switching unit arms is connected directly to the commercial power supply 1. In the inverter unit 20, a connection point between Q1 and Q2 in one of the switching unit arms and a connection point between Q3 and Q4 in other one of the switching unit arms are individually connected to the primary side of the contactless power transfer device 30. In the inverter unit 40, a connection point between Q1 and Q2 in one of the switching unit arms and a connection point between Q3 and Q4 in other one of the switching unit arms are individually connected to the secondary side of the contactless power transfer device 30.

The contactless power transfer device 30 includes: a primary-side coil 31 and a secondary-side coil 32 that form a contactless power transfer transformer; a series capacitor 33 connected to the primary-side coil 31 in series; a parallel capacitor 34 connected to the secondary-side coil 32 in parallel; and an inductor 35 connected to the secondary-side coil 32 in series and at a side nearer to the inverter unit 40 than the parallel capacitor 34.

The controller (not illustrated) controls turning on and off the switching elements included in the respective switching units (Q1, Q2, Q3, and Q4) of the high power factor converter unit 10, the inverter unit 20, and the inverter unit 40.

For G2V, in the high power factor converter unit 10, the controller performs PWM control (pulse width modulation control) on the switching elements in Q1, Q2, Q3, and Q4, whereby direct current having a variable voltage is supplied to the smoothing capacitor 2 from alternating current of the commercial power supply 1. By appropriately performing the PWM control, a power factor of the commercial power supply 1 can be set equal to one, and also the current supplied from the commercial power supply 1 can be converted into the sine-wave current with extremely less harmonics. For operation of a high power factor converter, it is necessary to interpose the inductor 11 between the commercial power supply 1 and the switching units of the high power factor converter unit 10.

In the inverter unit 20 into which direct current is input from the smoothing capacitor 2, a set of switching elements in the Q1 and Q4 and a set of switching elements in Q2 and Q3 alternately operate into on and off states in accordance with control signals from the controller in cycles corresponding to the frequency f0, so that alternating current having a frequency f0 is output from the inverter unit 20.

The characteristics of the contactless power transfer device 30 will be described later.

In the inverter unit 40 into which alternating current with a high-frequency wave is input from the contactless power transfer device 30, control is performed so that the switching elements in Q1, Q2, Q3, and Q4 are turned off. Thus, in the inverter unit 40, only the feedback diodes in Q1, Q2, Q3, and Q4 operate, whereby full-wave rectification is performed on the alternating current. Direct current output from the inverter unit 40 is smoothed by the smoothing capacitor 3 and then input to the secondary battery 4.

To the contrary, for V2G, the switching elements in Q1 and Q4 and the switching elements in Q2 and Q3 in the inverter unit 40 alternately operates into on and off states in cycles corresponding to the frequency f0 in accordance with control signals from the controller. As a result, alternating current of the frequency f0 is output from the inverter unit 40 to the contactless power transfer device 30. In the inverter unit 20 into which alternating current of a high-frequency wave is input from the contactless power transfer device 30, control is performed so that the switching elements in Q1, Q2, Q3, and Q4 are turned off. Accordingly, only the feedback diodes in Q1, Q2, Q3, and Q4 function, and full-wave rectification is performed on the alternating current. Direct current output from the inverter unit 20 is smoothened by the smoothing capacitor 2 and then input into the high power factor converter unit 10.

In the high power factor converter unit 10 into which direct current is input, the controller performs PWM control on the switching elements in Q1, Q2, Q3, and Q4. Consequently, sine-wave current with a power factor of equal to -1 and with less harmonics component is supplied to the commercial power supply 1. In the high power factor converter unit 10, as long as input direct current is in an appropriate range, alternating current having a constant voltage can be supplied to the commercial power supply 1.

Next, there are described the characteristics of the contactless power transfer device 30 obtained by adding a secondary-side series inductor 35 to the capacitors 33 and 34 according to the SP method. Here, the values of the secondary-side parallel capacitor 34, the secondary-side series inductor 35, and the primary-side series capacitor 33 are denoted as Cp, Ls, and Cs, respectively. Cp, Ls, and Cs are set as follows.

$$1/(\omega_0 \times Cp) = \omega_0 \times L_2 = \omega_0 \times Ls = x_P = x'_0 + x_2 \quad \text{(expression 5)}$$

$$Ls = L_2 \quad \text{(expression 6)}$$

$$1/(\omega_0 \times Cs') = \omega_0 \times L'_1 = x'_S = x'_0 + x'_1 \quad \text{(expression 7)}$$

Here, $L_1$ and $L_2$ are self inductances of the primary coil 31 and the secondary coil 32, respectively. Further, the definitions of $\omega_0$, $x_P$, $x'_0$, $x_2$, $x'_S$, and $x'_1$ are the same as those in expressions 1 and 2.

While Cp takes the same value as in equation 1 of the SP method, Cs takes a value different from the one Cs takes in expression 2 of the SP method.

When the frequencies of alternating current generated by the inverter unit 20 for G2V and alternating current generated by the inverter unit 40 for V2G are denoted as f0($=\omega_0/2\pi$), these values for Cp, Ls, and Cs can be represented as:

$$Cp = 1/\{(2\pi f0)^2 \times L_2\} \quad \text{(expression 8),}$$

$$Ls = L_2 \quad \text{(expression 9),}$$

and

$$Cs = 1/\{(2\pi f0)^2 \times L_1\} \quad \text{(expression 10).}$$

When the values for Cp, Ls, and Cs are thus set, the following expressions hold with respect to the ratio a of the numbers of windings of the primary coil 31 and the secondary coil 32, and $b = x'_0/(x'_0 + x_2)$.

$$V_2 = V_{IN}/(ab) \quad \text{(expression 11)}$$

$$I_{2L} = abI_{IN} \quad \text{(expression 12)}$$

Here,

$V_{IN}$, $I_{IN}$: a voltage and a current at the connection portion between the inverter unit 20 and the contactless power transfer device 30; and
$V_2$, $I_{2L}$: a voltage and a current at the connection portion between the inverter unit 40 and the contactless power transfer device 30.

A value taken by b is substantially equal to the value of the coupling coefficient k. Therefore, the voltage ratio can be desirably set by adjusting the ratio a of the numbers of windings in accordance with the coupling coefficient k.

In G2V, power supply is performed at a maximum efficiency when

$$R_L = \{(x'_0 + x_2)^2/x'_0\}(r'_1/r_2)^{1/2} \quad \text{(expression 13).}$$

Here, $R_L$ denotes a resistance load for the secondary battery 4. Further, in V2G, power supply is performed at a maximum efficiency when

$$R'_L = x'_0 \times (r'_1/r_2)^{1/2} \quad \text{(expression 14).}$$

Next described are results of an experiment conducted to verify the characteristics of this system.

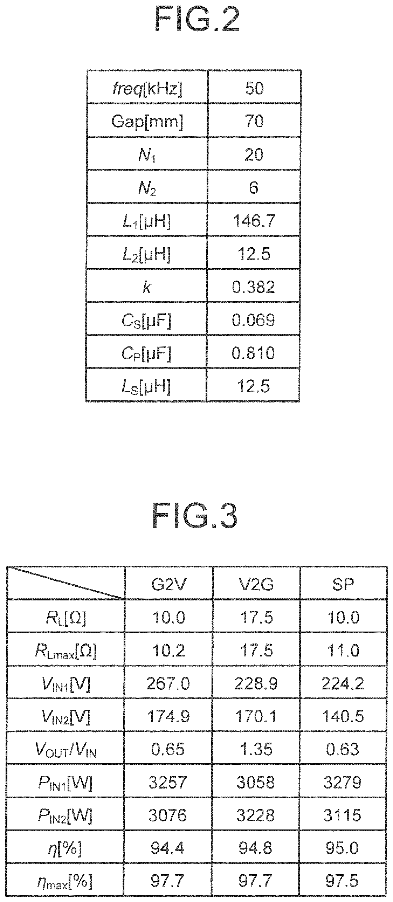

In this experiment, bidirectional power supply was performed with a contactless power transfer device having a transformer constant as presented in the table in FIG. 2 and with a circuit as illustrated in FIG. 1. Resistance loads $R_L$ in G2V and in V2G are set at 10 ohms, which is a value obtained from expression 13, and at 17.5 ohms, which is a value obtained from expression 14.

Unidirectional power supply was also performed with a contactless power transfer device according to the SP method, which does not include a secondary-side series inductor, and results thereof are compared with the above results.

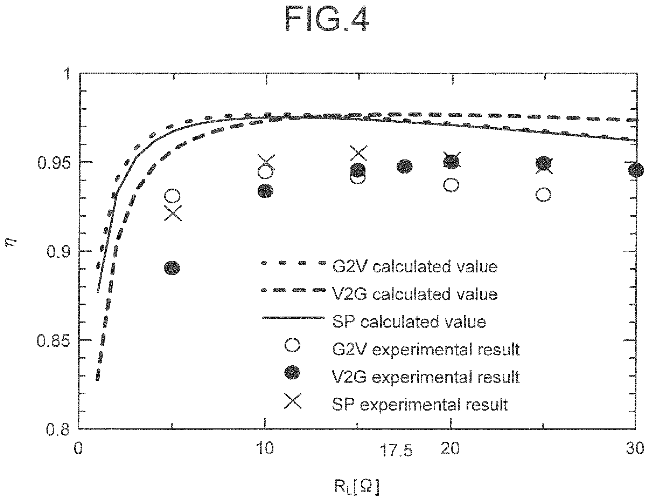

FIG. 3 illustrates measurement results in the cases of G2V, V2G, and SP. The graph in FIG. 4 indicates calculated values and experimental values representing relations between the resistance loads $R_L$ and the power supply efficiencies η in G2V, V2G, and SP.

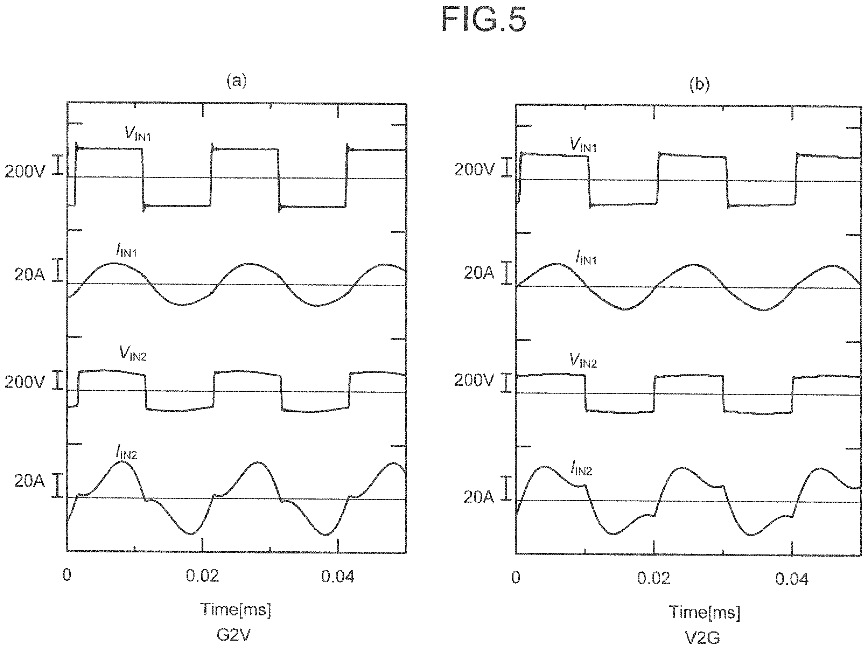

FIG. 5(a) depicts waveforms of input and output voltages and input and output currents of the contactless power transfer device for G2V. FIG. 5(b) depicts waveforms of input and output voltages and input and output currents of the contactless power transfer device for V2G.

FIG. 3 and FIG. 4 verify that, in this bidirectional contactless power transfer system, bidirectional power supply is performed with high efficiency comparable to that in the unidirectional power supply according to the SP manner.

Furthermore, FIGS. 5(a) and 5(b) verify that the phases of input and output voltages are matched with each other and that the ideal transformer characteristics are thus imparted.

The values for Cp, Ls, and Cs expressed by expressions 8, 9, and 10 are theoretical values for obtaining the ideal transformer characteristics. In an actual device, bidirectional power supply with high efficiency still can be performed as long as deviations from these theoretical values are small.

When the theoretical values of expressions 8 and 10 are denoted by Cp0 and Cs0, it is considered that bidirectional power supply with high efficiency can be performed if Cs, Cp, and Ls take values in the following ranges:

$$\mathtt{Cs0×0.7≤Cs≤Cs0×1.3,}$$

$$\mathtt{Cp0×0.7≤Cp≤Cp0×1.3,}$$

and

$$\mathtt{L2×0.7≤Ls≤L2×1.3.}$$

As described above, with this bidirectional contactless power transfer system, only slight modification to the configuration of the contactless power transfer device used for unidirectional power supply is necessary to enable highly efficient bidirectional power supply.

Furthermore, control of voltages and currents of the power receiving side is made easier regardless of the power supply direction since the contactless power transfer device has the ideal transformer characteristics.

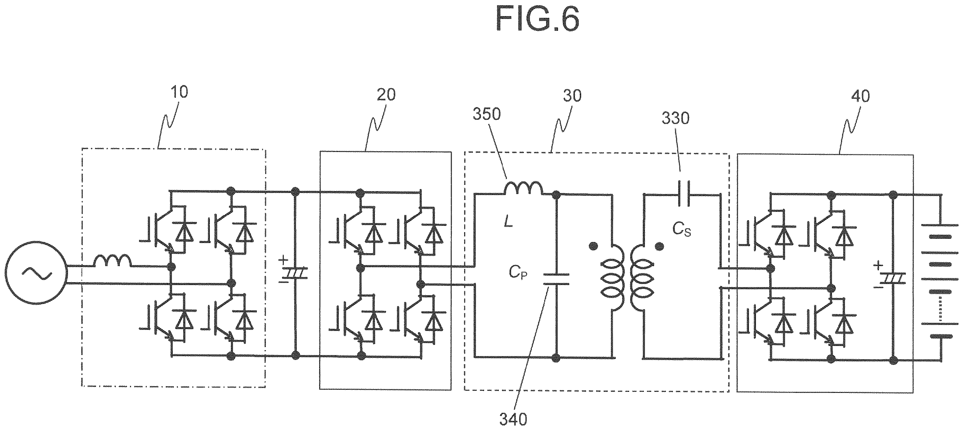

This bidirectional contactless power transfer system enables bidirectional power supply with high efficiency. Consequently, the capacitors and the inductor on the primary-side and the secondary-side of the inductor contactless power transfer device may be switched to be arranged on different side. That is, as illustrated in FIG. 6, a series capacitor 330 may be arranged on the secondary side of a contactless power transfer device 300 with a series inductor 350 and a parallel capacitor 340 arranged on the primary side thereof.

(First embodiment)

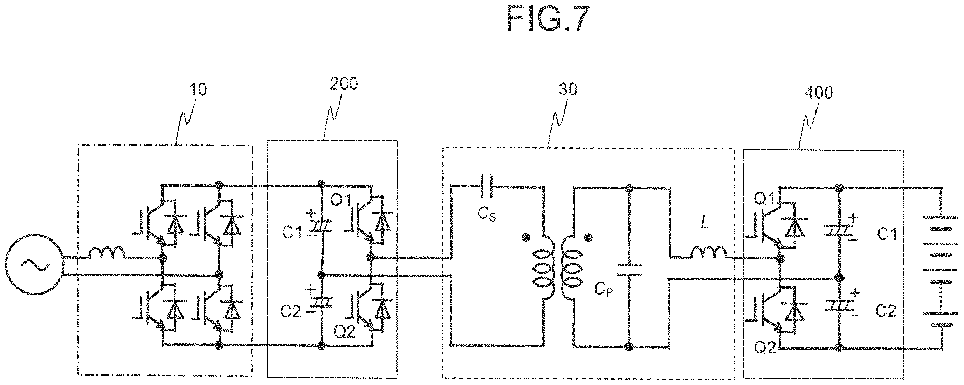

FIG. 7 illustrates a circuit configuration of a bidirectional contactless power transfer system according to a first embodiment of the present invention. This system differs from the first embodiment (FIG. 1) only in configurations of an inverter unit 200 and an inverter unit 400 that are connected to the contactless power transfer device 30. The high power factor converter unit 10 and the contactless power transfer device 30 have the same configurations as those in the example described above.

The inverter unit 200 and the inverter unit 400 each include two switching units (Q1 and Q2) and voltage separating capacitors (C1 and C2). A switching unit arm in which Q1 and Q2 are connected to each other in series and a capacitor arm in which C1 and C2 are connected to each other in series are connected to each other in parallel. In the inverter unit 200, the connection point between Q1 and Q2 in the switching unit arm and the connection point between C1 and C2 in the capacitor arm are individually connected to the primary-side circuit of the contactless power transfer device 30. In the inverter unit 400, the connection point between Q1 and Q2 in the switching unit arm and the connection point between C1 and C2 in the capacitor arm are individually connected to secondary-side circuit of a contactless power transfer device 30.

The controller (not illustrated) controls ON and OFF operation of switching elements included in the respective switching units (Q1 and Q2) of the inverter unit 200 and the inverter unit 400.

In the case of G2V, in the inverter unit 200, the switching elements in Q1 and Q2 alternately operate into on and off states at cycles corresponding to a frequency f0 in accordance with PWM control signals from the controller. Thus, the inverter unit 200 operates as a half-bridge inverter.

In this case, the respective capacitors C1 and C2 are charged with voltages applied thereto. These voltages are those obtained by dividing an output direct-current voltage of the high power factor converter unit 10. Having the switching elements in Q1 and Q2 alternately operate into on and off states causes power stored in the capacitors C1 and C2 to be alternately discharged, whereby alternating current having a frequency f0 is output from the inverter unit 200 into the primary-side circuit of the contactless power transfer device 30.

In the inverter unit 400, in the case of G2V, control is performed so that the switching elements in Q1 and Q2 are turned off. Thus, only the feedback diodes operate in Q1 and Q2, whereby the inverter unit 400 operates as a voltage doubler rectifier.

In this case, C1 is charged with current that flows through the feedback diode in Q1, and C2 is charged with current that flows through the feedback diode in Q2. A direct current voltage obtained by adding the voltages for charging the capacitors C1 and C2 in series is applied from the inverter unit 400 to the secondary battery 4.

In contrast, in the case of V2G, the switching elements in Q1 and Q2 alternately operate into on and off states in cycles corresponding to a frequency $f_0$ in accordance with PWM control signals from the controller, whereby the inverter unit 400 operates as a half-bridge inverter.

The inverter unit 200 is controlled so that the switching elements in Q1 and Q2 may assume an off state, thereby operating as a voltage doubler rectifier.

As described above, in this bidirectional contactless power transfer system, one of the inverter units 200 and 400 operates as a half-bridge inverter. Consequently, the output voltage of alternating-current from the one of the inverter units is reduced to half the output of the full-bridge inverter. However, the other inverter unit operates as a voltage doubler rectifier, so that the output voltage is increased to twice as much as the output of a full-wave rectifier. Hence, the same power supply voltages as those in the system according to the earlier example are obtained in both directions.

The number of switching units used in the inverter units 200 and 400 is half the number of switching units used in a full-bridge inverter. For this reason, this bidirectional contactless power transfer system can be provided at low cost.

Furthermore, while a full-bridge inverter constantly has current flowing through two of the switching units, this bidirectional contactless power transfer system has current alternately flowing through the two switching units in the inverter unit 200 or 400 and constantly has current flowing through only one switching unit. Consequently, according to the bidirectional contactless power transfer system, power consumption can be reduced, and thereby, power supply efficiency can be increased correspondingly.

As similar to the first embodiment, FIG. 7 illustrates a case where the contactless power transfer device 30 includes a primary series capacitor, a secondary parallel capacitor, and a secondary series inductor. However, even when a contactless power transfer device that uses different method is used, the bidirectional contactless power transfer system including the inverter units 200 and 400 can improve the power supply efficiency and can reduce the cost by reducing the power consumption.

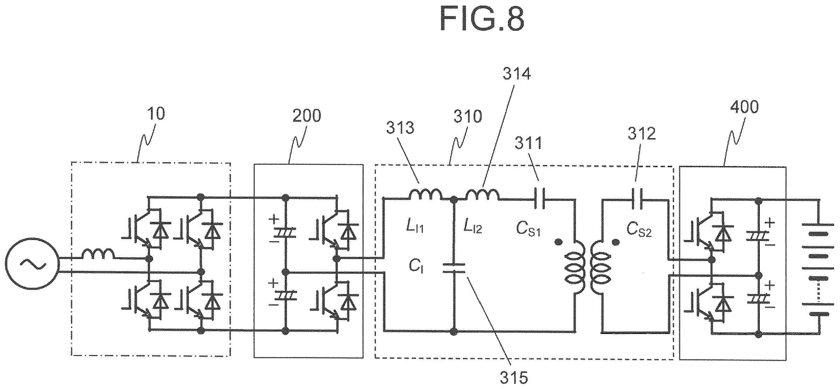

FIG. 8 illustrates an example where a contactless power transfer device 310 according to an improved PP method is set in the bidirectional contactless power transfer system that includes the inverter units 200 and 400.

A contactless power transfer device 310 here includes a primary-side series capacitor 311 and a secondary-side series capacitor 312, and further includes two inductors 313 and 314 that constitute a T-LCL-type immittance converter, and one capacitor 315. This immittance converter is incorporated into the system side of a contactless power transfer device according to a SS method so that the ideal transformer characteristics can be obtained.

As the immittance converter, a T-CLC-type immittance converter may be used. According to the T-CLS-type immitance, two capacitors and one inductor interposed therebetween are connected in a T shape.

Alternatively, the inverter unit 200 of the second embodiment and the inverter unit 40 of the first embodiment may be used as the first power converter connected to the primary side and the third power converter connected to the secondary side, respectively, of the contactless power transfer device. Further alternatively, the inverter unit 20 of the first embodiment and the inverter unit 400 of the second embodiment may be used as the first power converter and the third power converter.

(Second embodiment)

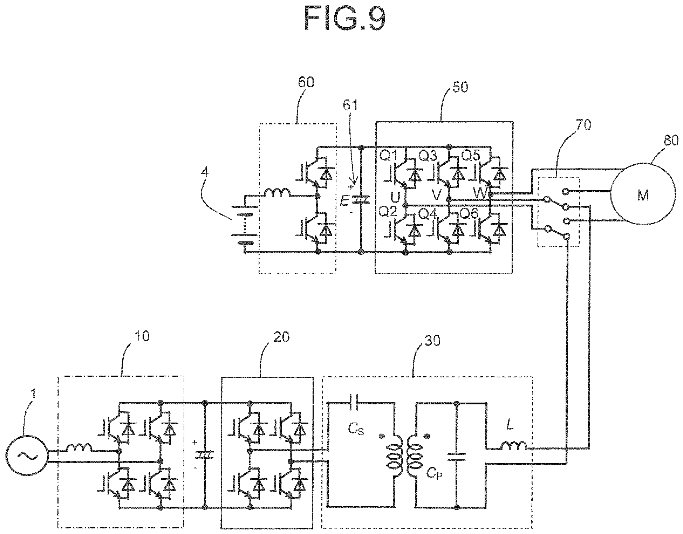

FIG. 9 illustrates the circuit configuration of a bidirectional contactless power transfer system according to a third embodiment of the present invention. The system differs from the example (FIG. 1) in that a three-phase voltage-type inverter 50 originally included in an electric vehicle and used for driving an electric motor is utilized as the third power converter connected to the secondary side of the contactless power transfer device 30.

The three-phase voltage-type inverter 50 includes a switching unit arm in which Q1 and Q2 are connected to each other in series, a switching unit arm in which Q3 and Q4 are connected to each other in series, and a switching unit arm in which Q5 and Q6 are connected to each other in series. The both ends of the switching unit arms are connected to each other in parallel. The intermediate point of the switching unit arm in which Q5 and Q6 are connected to each other in series is used as an output terminal to the W phase of an electric motor 80. The intermediate point of the switching unit arm in which Q3 and Q4 are connected to each other in series is used as an output terminal to the V phase of the electric motor 80. The intermediate point of the switching unit arm in which Q1 and Q2 are connected to each other in series is used as an output terminal to the U phase of the electric motor 80. The W-phase output terminal of the three-phase voltage-type inverter 50 is connected directly to the electric motor 80. The V-phase and U-phase output terminals are each connected to the electric motor 80 or the secondary-side circuit of the contactless power transfer device 30 via a change-over switch 70.

A converter 60 including a smoothing capacitor 61 and a step-up/down chopper circuit is interposed between the three-phase voltage-type inverter 50 and the secondary battery 4. A controller (not illustrated) controls turning on and off the switching elements included in the switching units of the three-phase voltage-type inverter 50 and the converter 60.

In this system, when the secondary battery 4 installed in the vehicle is charged, the change-over switch 70 is switched to connect the V-phase output terminal and U-phase output terminal of the three-phase voltage-type inverter 50 to the secondary side of the contactless power transfer device 30. In the three-phase voltage-type inverter 50 into which high-frequency alternating current is output from the contactless power transfer device 30, control is performed so that the switching elements in all of Q1, Q2, Q3, Q4, Q5, and Q6 are turned off.

Consequently, in the three-phase voltage-type inverter 50, only feedback diodes in the Q1, Q2, Q3, and Q4 function, and full-wave rectification is performed on alternating current. Direct current output from the three-phase voltage-type inverter 50 is smoothed by the smoothing capacitor 61, has its voltage stepped down by the converter 60, and is then input into the secondary battery 4.

When the secondary battery 4 is used to drive the electric motor 80, the change-over switch 70 is switched to connect the V-phase and U-phase output terminals of the three-phase voltage-type inverter 50 to the electric motor 80.

At this time, the output of the secondary battery 4 is stepped up to a voltage for driving the electric motor by the converter 60, smoothed by the smoothing capacitor 61, and then input to the three-phase voltage-type inverter 50.

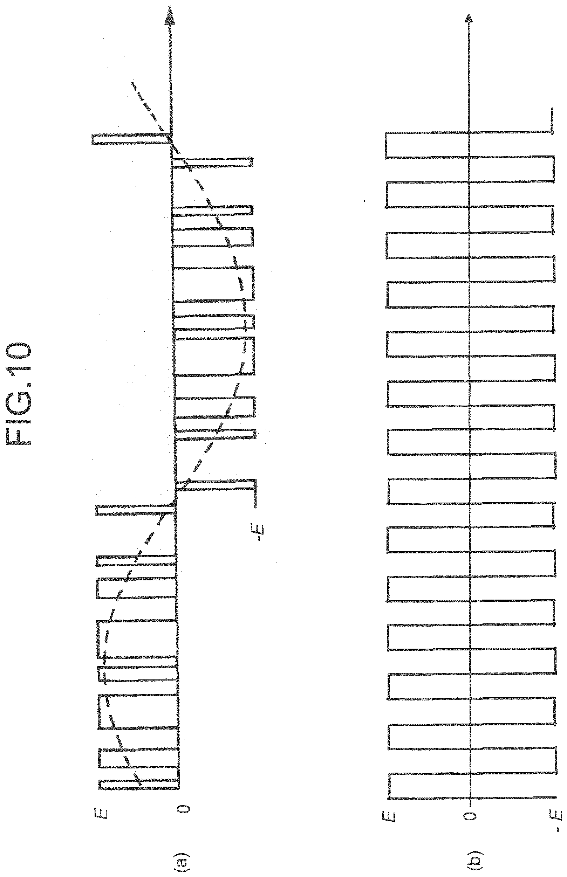

The switching elements in the two switching units constituting each of the switching unit arms of the three-phase voltage-type inverter 50 alternately performs on and off operation of a PWM waveform illustrated in FIG. 10(a) in accordance with PWM control (pulse width modulation control) of the controller. As a result, alternating current of the U, V, and W phases indicated by the dotted line is generated. The three-phase alternating current generated by the three-phase voltage-type inverter 50 is input to the electric motor 80 to drive the electric motor 80.

In the case of V2G, the change-over switch 70 is switched so that the V-phase and U-phase output terminals of the three-phase voltage-type inverter 50 may be connected to the secondary-side circuit of the contactless power transfer device 30. Subsequently, in the three-phase voltage-type inverter 50, the switching elements in a set of Q1 and Q4 and the switching elements in a set of Q2 and Q3 perform alternately on and off operation of a single-phase rectangular waveform illustrated in FIG. 10(b) in accordance with control signals from the controller.

Consequently, the output of the secondary battery 4 stepped up by the converter 60 is converted by the three-phase voltage-type inverter 50 into high-frequency alternating current to be input to the contactless power transfer device 30. The output then passes through the inverter unit 20 and the high power factor converter unit 10 to be supplied to the commercial power supply 1. In this case, the inverter unit 20 and the high power factor converter unit 10 operate in the same manner as those in the first embodiment (FIG. 1).

As described above, in this system, the three-phase voltage-type inverter 50 installed in the vehicle operates as a three-phase voltage-type PWM inverter when being connected to the three-phase electric motor. When power of the secondary battery is used at home or in the grid, the three-phase voltage-type inverter 50 is connected to the secondary-side circuit of the contactless power transfer device by the change-over switch to operate as a single-phase rectangular wave inverter that outputs a single-phase rectangular wave.

FIG. 11 illustrates a variation of the third embodiment. In this system, the circuit in the second embodiment (FIG. 7) is adopted for the purpose of utilizing a three-phase voltage-type inverter 51 installed in a vehicle for bidirectional contactless power transfer.

For this purpose, connected to the primary-side circuit of the contactless power transfer device 30 is the inverter unit 200 including a switching unit arm in which two switching units are connected to each other in series and a capacitor arm in which two capacitors are connected to each other in series. The two capacitors form a voltage separating capacitor. As described above, this inverter unit 200 operates as a half-bridge inverter in converting direct current into alternating current, and operates as a voltage doubler rectifier in converting alternating current into direct current.

The W-phase and V-phase output terminals of the three-phase voltage-type inverter 51 are connected directly to the electric motor 80. The U-phase output terminal thereof is connected to the electric motor 80 or the secondary-side circuit of the contactless power transfer device 30 via a change-over switch 71.

A capacitor arm 62 in which two capacitors configuring a voltage separating capacitor are connected to each other in series is interposed between and connected to the three-phase voltage-type inverter 51 and the converter 60. The intermediate point of the capacitor arm 62 is connected to the secondary-side circuit of the contactless power transfer device 30.

In this circuit, the same circuit as the inverter unit 400 in the second embodiment (FIG. 7) is formed of Q1 and Q2 of the three-phase voltage-type inverter 51 and the capacitor arm 62 when the switching elements in Q3, Q4, Q5, and Q6 of the three-phase voltage-type inverter 51 are in an off state with the U-phase output terminal of the three-phase voltage-type inverter 51 being connected to the secondary-side circuit of the contactless power transfer device 30. The switching elements in Q1 and Q2 are controlled, whereby this circuit operates as a half-bridge inverter when converting direct current into alternating current, and operates as a voltage doubler rectifier when converting alternating current into direct current. In this manner, bidirectional power supply is achieved as in the second embodiment.

Furthermore, when the change-over switch 71 is switched to connect the U-phase output terminal of the three-phase voltage-type inverter 51 to the electric motor 80, the electric motor 80 can be driven by the secondary battery 4.


INDUSTRIAL APPLICABILITY

The present invention provides a bidirectional contactless power transfer system that enables bidirectional power transfer highly efficiently and can be widely applicable to moving bodies such as automobiles, transportation vehicles, and mobile robots.


REFERENCE SIGNS LIST

| | |
|---|---|
| 1 | COMMERCIAL POWER SUPPLY |
| 2 | SMOOTHING CAPACITOR |
| 3 | SMOOTHING CAPACITOR |
| 4 | SECONDARY BATTERY |
| 10 | HIGH POWER FACTOR CONVERTER UNIT |
| 11 | INDUCTOR |
| 20 | INVERTER UNIT |
| 30 | CONTACTLESS POWER TRANSFER DEVICE |
| 31 | PRIMARY-SIDE COIL |
| 32 | SECONDARY-SIDE COIL |
| 33 | SERIES CAPACITOR |
| 34 | PARALLEL CAPACITOR |
| 35 | INDUCTOR |
| 40 | INVERTER UNIT |
| 50 | THREE-PHASE VOLTAGE-TYPE INVERTER |
| 51 | THREE-PHASE VOLTAGE-TYPE INVERTER |
| 60 | CONVERTER |
| 61 | SMOOTHING CAPACITOR |
| 62 | VOLTAGE DIVIDING CAPACITOR |
| 70 | CHANGE-OVER SWITCH |
| 71 | CHANGE-OVER SWITCH |
| 80 | ELECTRIC MOTOR |
| 101 | ENGINE |
| 102 | MOTOR |
| 103 | INVERTER |
| 104 | SECONDARY BATTERY |
| 105 | COMMERCIAL POWER SUPPLY |
| 110 | RECTIFIER |
| 120 | INVERTER |
| 131 | POWER TRANSMISSION COIL |
| 132 | POWER RECEPTION COIL |

133    SERIES CAPACITOR
134    PARALLEL CAPACITOR
140    RECTIFIER
200    INVERTER UNIT
201    EV INVERTER
202    EV INVERTER
300    CONTACTLESS POWER TRANSFER DEVICE
310    CONTACTLESS POWER TRANSFER DEVICE
311    PRIMARY-SIDE SERIES CAPACITOR
312    SECONDARY-SIDE SERIES CAPACITOR
313    INDUCTOR
314    INDUCTOR
315    CAPACITOR
330    SERIES CAPACITOR
340    PARALLEL CAPACITOR
350    SERIES INDUCTOR
400    INVERTER UNIT

**Claims**

1. A bidirectional contactless power transfer system comprising
   a contactless power transfer device (30; 310) that includes a first coil (31) and a second coil (32) spaced apart from the first coil, the bidirectional contactless power transfer system being supplied with electrical power from a primary-side circuit to a secondary-side circuit and from the secondary-side circuit to the primary-side circuit by effect of electromagnetic induction, the primary-side circuit including the first coil, the secondary-side circuit including the second coil, wherein
   the primary-side circuit in the contactless power transfer device connects to a first power converter (20; 200) having a function to convert direct current into alternating current and a function to convert alternating current into direct current,
   the first power converter connects to a second power converter (10) having a function of converting direct current into alternating current and a function of converting alternating current into direct current, and the second power converter further connects to a commercial power supply (1),
   the secondary-side circuit in the contactless power transfer device connects to a third power converter (40; 400) having a function of converting direct current into alternating current and a function of converting alternating current into direct current, and the third power converter further connects to a direct current power supply (4), such as a secondary battery, of a moving body,
   when the power is transferred from the primary-side circuit to the secondary-side circuit in the contactless power transfer device, the second power converter converts alternating current of the commercial power supply into direct current, the first power converter converts the direct current into alternating current to supply the alternating current to the primary-side circuit, and the third power converter converts alternating current output from the secondary-side circuit into direct current to supply the direct current to the direct current power supply of the moving body,
   when the power is transferred from the secondary-side circuit to the primary-side circuit in the contactless power transfer device, the third power converter converts direct current output from the direct current power supply of the moving body into alternating current to supply the alternating current to the secondary-side circuit, the first power converter converts alternating current output from the primary-side circuit into direct current, and the second power converter converts the direct current into alternating current and supply the alternating current to the commercial power supply,
   at least one of the first power converter (20;200) and the third power converter (40;400) includes:

   a switching unit arm including two switching units (Q1, Q2, Q3, Q4) connected in series, each of the switching units being formed of a switching element and a diode connected in inverse-parallel to the switching element; and
   a capacitor arm connected to the switching unit arm in parallel and including two capacitors connected in series, the primary-side circuit or the secondary-side circuit is connected to a connection point between the two switching units of the switching unit arm and to a connection point between the two capacitors of the capacitor arm, and, if direct current is converted into alternating current, the at least one of the first power converter and the third power converter alternately operates into on and off states in cycles corresponding to a predetermined frequency in accordance with PWM control signals to operate as a half-bridge inverter, and, if alternating current is converted into direct current, the switching elements in the at least one of the first power converter and the third power converter are turned off, only the feedback diodes in the at least one of the first power converter and the third power converter operates and the at least one of the first power converter and the third power converter operates as a voltage doubler rectifier circuit, and

bidirectional power transfer is performed only by switching operation of the first power converter, the second power converter, and the third power converter.

2. The bidirectional contactless power transfer system according to Claim 1, wherein the contactless power transfer device (30; 310) includes a first series capacitor (33) connected to the first coil (31) in series, a first parallel capacitor (34) connected to the second coil (32) in parallel, and a first inductor (35) connected to the second coil in series.

3. The bidirectional contactless power transfer system according to Claim 1, wherein the contactless power transfer device (30; 310) includes a second parallel capacitor (340) connected to the first coil in parallel, a second inductor (350) connected to the first coil in series, and a second series capacitor (330) connected to the second coil in series.

4. The bidirectional contactless power transfer system according to Claim 2 or 3, wherein
a value Cs of the first or the second series capacitor (33; 330) is set to

$$Cs \approx 1 / \{(2\pi f0)^2 \times L1\},$$

a value Cp of the first or the second parallel capacitor (34; 340) is set to

$$Cp \approx 1 / \{(2\pi f0)^2 \times L2\},$$

and
a value Ls of the first or the second series inductor is set to

$$Ls \approx L2, \text{ and wherein}$$

f0 denotes a frequency of alternating current generated by the first power converter of when the power is transferred from the primary-side circuit to the secondary side circuit in the contactless power transfer device as well as a frequency of alternating current generated by the third power converter of when the power is transferred from the secondary-side circuit to the primary-side circuit in the contactless power transfer device,
L1 denotes a self-inductance of the coil to which the first or the second series capacitor is connected, and
L2 denotes a self-inductance of the coil to which the first or the second parallel capacitor is connected.

5. The bidirectional contactless power transfer system according to Claim 4, wherein
the value Cs of the first or the second series capacitor (33; 330) is set in the range of

$$Cs0 \times 0.7 \leq Cs \leq Cs0 \times 1.3,$$

the value Cp of the first or the second parallel capacitor (34; 340) is set in the range of

$$Cp0 \times 0.7 \leq Cp \leq Cp0 \times 1.3,$$

and
the value Ls of the first or the second series inductor is set in the range of

$$L2 \times 0.7 \leq Ls \leq L2 \times 1.3, \text{ and wherein}$$

$$Cs0 = 1 / \{(2\pi f0)^2 \times L1\} \text{ and } Cp0 = 1 / \{(2\pi f0)^2 \times L2\}.$$

**6.** The bidirectional contactless power transfer system according to any one of Claims 1 to 5, wherein
the third power converter is a three-phase voltage type inverter, and
a direct current side of the three-phase voltage-type inverter is connected to the direct current power supply of the moving body, and
a three-phase alternating current side of the three-phase voltage-type inverter is connected, via a change-over switch, to a three-phase electric motor and the secondary side circuit of the contactless power transfer device.

**7.** The bidirectional contactless power transfer system according to Claim 6, wherein,
if the three-phase voltage-type inverter is connected to the three-phase electric motor by the change-over switch, the three- phase voltage-type inverter operates as a three-phase voltage-type PWM inverter, and,
if the three-phase voltage-type inverter is connected to the secondary-side circuit in the contactless power transfer device by the change-over switch, the three-phase voltage-type inverter operates as a single-phase rectangular wave inverter that outputs a single-phase rectangular wave.

**Patentansprüche**

**1.** Bidirektionales kontaktloses Energieübertragungssystem mit:

einer kontaktlosen Energieübertragungsvorrichtung (30; 310), die eine erste Spule (31) und eine zweite Spule (32) enthält, die von der ersten Spule getrennt ist, wobei das bidirektionale kontaktlose Energieübertragungssystem von einer primärseitigen Schaltung zu einer sekundärseitigen Schaltung und von der sekundärseitigen Schaltung zu der primärseitigen Schaltung durch Wirkung von elektromagnetischer Induktion mit elektrischer Energie versorgt wird, wobei die primärseitige Schaltung die erste Spule enthält, und die sekundärseitige Schaltung die zweite Spule enthält, wobei
die primärseitige Schaltung in der kontaktlosen Energieübertragungsvorrichtung mit einem ersten Stromrichter (20; 200) verbunden ist, der eine Funktion hat, um Gleichstrom in Wechselstrom und Wechselstrom in Gleichstrom umzuwandeln,
der erste Stromrichter mit einem zweiten Stromrichter (10) verbunden ist, der eine Funktion hat, um Gleichstrom in Wechselstrom und Wechselstrom in Gleichstrom umzuwandeln, und der zweite Stromrichter ist ferner mit der Netzstromversorgung (1) verbunden,
die sekundärseitige Schaltung in der kontaktlosen Energieübertragungsvorrichtung mit einem dritten Stromrichter (40; 400) verbunden ist, der eine Funktion hat, um Gleichstrom in Wechselstrom und Wechselstrom in Gleichstrom umzuwandeln, und der dritte Stromrichter ist ferner mit der Gleichstromversorgung (4), wie eine Sekundärbatterie, eines sich bewegenden Körpers verbunden,
wenn die Energie von der primärseitigen Schaltung zu der sekundärseitigen Schaltung in der kontaktlosen Energieübertragungsvorrichtung übertragen ist, wandelt der zweite Stromrichter den Wechselstrom von der Netzstromversorgung in Gleichstrom um, wobei der erste Stromrichter den Gleichstrom in Wechselstrom umwandelt, um der primärseitigen Schaltung den Wechselstrom zu zuführen, und wobei der dritte Stromrichter die Wechselstromausgabe von der sekundärseitigen Schaltung in Gleichstrom umwandelt, um der Gleichstromversorgung des sich bewegenden Körpers Gleichstrom zu zuführen,
wenn die Energie von der sekundärseitigen Schaltung zu der primärseitigen Schaltung in der kontaktlosen Energieübertragungsvorrichtung übertragen ist, wandelt der dritte Stromrichter die Gleichstromausgabe von der Gleichstromversorgung des sich bewegenden Körpers in Wechselstrom um, um der sekundärseitigen Schaltung den Wechselstrom zu zuführen, wobei der erste Stromrichter die Wechselstromausgabe von der primärseitigen Schaltung in Gleichstrom umwandelt, und der zweite Stromrichter den Gleichstrom in Wechselstrom umwandelt und den Wechselstrom der Netzstromversorgung zu zuführen,
zumindest einer von dem ersten Stromrichter (20; 200) und dem dritten Stromrichter (40;400) folgendes enthält:

eine Schalteinheitshalterung, die zwei Schalteinheiten (Q1, Q2, Q3, Q4) enthält, die in Reihe geschaltet sind, wobei die Schalteinheiten aus einem Schaltelement und einer Diode, die invers-parallel mit dem Schaltelement verbunden ist, gebildet sind; und
eine Kondensatorhalterung, die mit den Schalteinheiten parallel verbunden ist und zwei Kondensatoren enthält, die in Reihe geschaltet sind,
die primärseitige Schaltung oder die sekundärseitige Schaltung, die mit einem Verbindungspunkt zwischen den zwei Schalteinheiten der Schalteinheitshalterung und einem Verbindungspunkt zwischen den zwei Kondensatoren der Kondensatorhalterung verbunden ist, und
wenn der Gleichstrom in Wechselstrom umgewandelt ist, arbeitet zumindest einer von dem ersten Stromrichter und dem dritten Stromrichter abwechselnd in Ein- und Auszuständen in Zyklen entsprechend einer vorbestimmten Frequenz gemäß PWM-Steuersignalen, um als Halbbrückenumrichter zu arbeiten, und, wenn der Wechselstrom in Gleichstrom umgewandelt ist, sind die Schaltelemente in dem zumindest einem von dem ersten Stromrichter und dem dritten Stromrichter abgeschaltet, wobei nur die Rückkopplungsdioden in dem zumindest einem von dem ersten Stromrichter und dem dritten Stromrichter arbeiten und der zumindest eine von dem ersten Stromrichter und dem dritten Stromrichter als Spannungsverdoppler-Gleichrichterschaltung arbeitet, und

bidirektionale Energieübertragung nur durch einen Schaltvorgang des ersten Stromrichters, des zweiten Stromrichters und des dritten Stromrichters durchgeführt wird.

2. Bidirektionales kontaktloses Energieübertragungssystem gemäß Anspruch 1, wobei die kontaktlose Energieübertragungsvorrichtung (30; 310) einen ersten Reihenkondensator (33), der mit der ersten Spule (31) in Reihe geschaltet ist, einen ersten Parallelkondensator (34), der mit der zweiten Spule (32) parallel geschaltet ist, und eine erste Induktivität (35), die mit der zweiten Spule in Reihe geschaltet ist, enthält.

3. Bidirektionales kontaktloses Energieübertragungssystem gemäß Anspruch 1, wobei die kontaktlose Energieübertragungsvorrichtung (30; 310) einen zweiten Parallelkondensator (340), der mit der ersten Spule parallel geschaltet ist, eine zweite Induktivität (350), die mit der ersten Spule in Reihe geschaltet ist, und einen zweiten Reihenkondensator (330), der mit der zweiten Spule in Reihe geschaltet ist, enthält.

4. Bidirektionales kontaktloses Energieübertragungssystem gemäß Anspruch 2 oder 3, wobei
ein Wert Cs des ersten oder des zweiten Reihenkondensators (33; 330) auf

$$Cs \approx 1 / \{(2\pi f0)^2 \times L1\} \text{ eingestellt wird,}$$

ein Wert Cp des ersten oder des zweiten Parallelkondensators (34; 340) auf

$$Cp \approx 1 / \{(2\pi f0)^2 \times L2\} \text{ eingestellt wird, und}$$

ein Wert Ls der ersten oder der zweiten Induktivität auf

$$Ls \approx L2 \text{ eingestellt wird, und wobei}$$

f0 eine Frequenz von Wechselstrom, der durch den ersten Stromrichter erzeugt wird, wenn die Energie von der primärseitigen Schaltung zu der sekundärseitigen Schaltung in der kontaktlosen Energieübertragungsvorrichtung übertragen wird, sowie eine Frequenz von Wechselstrom, der durch den dritten Stromrichter erzeugt wird, wenn die Energie von der sekundärseitigen Schaltung zu der primärseitigen Schaltung in der kontaktlosen Energieübertragungsvorrichtung übertragen wird, bezeichnet,
L1 eine Eigeninduktivität der Spule bezeichnet, mit welcher der erste oder der zweite Reihenkondensator verbunden ist, und
L2 eine Eigeninduktivität der Spule bezeichnet, mit welcher der erste oder der zweite Parallelkondensator verbunden ist.

5. Bidirektionales kontaktloses Energieübertragungssystem gemäß Anspruch 4, wobei
der Wert Cs des ersten oder des zweiten Reihenkondensators (33; 330) in dem Bereich

$$Cs0 \times 0.7 \leq Cs \leq Cs0 \times 1.3 \text{ eingestellt wird,}$$

der Wert Cp des ersten oder des zweiten Parallelkondensators (34; 340) in dem Bereich

$$Cp0 \times 0.7 \leq Cp \leq Cp0 \times 1.3 \text{ eingestellt wird, und}$$

der Wert Ls der ersten oder der zweiten Induktivität in dem Bereich

$$L2 \times 0.7 \leq Ls \leq L2 \times 1.3 \text{ eingestellt wird, und wobei}$$

$$Cs0 = 1 \ / \ \{(2\pi f0)^2 \times L1\} \text{ und } Cp0 = 1 \ / \ \{(2\pi f0)^2 \times L2\} \text{ ist.}$$

**6.** Bidirektionales kontaktloses Energieübertragungssystem gemäß einem der Ansprüche 1 bis 5, wobei der dritte Stromrichter ein dreiphasiger Spannungswechselrichter ist, und
eine Gleichstormseite des dreiphasigen Spannungswechselrichters mit der Gleichstromversorgung des sich bewegenden Körpers verbunden ist, und
eine dreiphasige Wechselstromseite des dreiphasigen Spannungswechselrichters über einen Wechselschalter mit einem dreiphasigen elektrischen Motor und der sekundärseitigen Schaltung der kontaktlosen Energieübertragungsvorrichtung verbunden ist.

**7.** Bidirektionales kontaktloses Energieübertragungssystem gemäß dem Anspruch 6, wobei,
wenn der dreiphasige Spannungswechselrichter durch den Wechselschalter mit dem dreiphasigen elektrischen Motor verbunden ist, arbeitet der dreiphasige Spannungswechselrichter als ein dreiphasiger PWM- Spannungswechselrichter, und
wenn der dreiphasige Spannungswechselrichter durch den Wechselschalter mit der sekundärseitigen Schaltung in der kontaktlosen Energieübertragungsvorrichtung verbunden ist, arbeitet der dreiphasige Spannungswechselrichter als ein einphasiger Rechtecksschwingungswechselrichter, der eine einphasige Rechtecksschwingung ausgibt.

**Revendications**

**1.** Système de transfert de puissance sans contact bidirectionnel comprenant
un dispositif de transfert de puissance sans contact (30 ; 310) qui comprend une première bobine (31) et une deuxième bobine (32) espacée de la première bobine, le système de transfert de puissance sans contact bidirectionnel étant alimenté en puissance électrique d'un circuit côté primaire vers un circuit côté secondaire et du circuit côté secondaire vers le circuit côté primaire par un effet d'induction électromagnétique, le circuit côté primaire comprenant la première bobine, le circuit côté secondaire comprenant la deuxième bobine, dans lequel
le circuit côté primaire dans le dispositif de transfert de puissance sans contact est connecté à un premier convertisseur de puissance (20 ; 200) ayant une fonction de conversion du courant continu en courant alternatif et une fonction de conversion du courant alternatif en courant continu,
le premier convertisseur de puissance est connecté à un deuxième convertisseur de puissance (10) ayant une fonction de conversion du courant continu en courant alternatif et une fonction de conversion du courant alternatif en courant continu, et le deuxième convertisseur de puissance est connecté en outre à une alimentation commerciale (1),
le circuit côté secondaire dans le dispositif de transfert de puissance sans contact est connecté à un troisième convertisseur de puissance (40 ; 400) ayant une fonction de conversion du courant continu en courant alternatif et une fonction de conversion du courant alternatif en courant continu, et le troisième convertisseur de puissance est connecté en outre à une alimentation en courant continu (4), telle qu'une batterie secondaire, d'un corps mobile,
lorsque la puissance est transférée du circuit côté primaire au circuit côté secondaire dans le dispositif de transfert de puissance sans contact, le deuxième convertisseur de puissance convertit le courant alternatif de l'alimentation commerciale en courant continu, le premier convertisseur de puissance convertit le courant continu en courant alternatif pour fournir le courant alternatif au circuit côté primaire, et le troisième convertisseur de puissance convertit le courant alternatif sorti du circuit côté secondaire en courant continu pour fournir le courant continu à l'alimentation en courant continu du corps mobile,
lorsque la puissance est transférée du circuit côté secondaire au circuit côté primaire dans le dispositif de transfert de puissance sans contact, le troisième convertisseur de puissance convertit le courant continu sorti de l'alimentation en courant continu du corps mobile en courant alternatif pour fournir le courant alternatif au circuit côté secondaire, le premier convertisseur de puissance convertit le courant alternatif sorti du circuit côté primaire en courant continu, et le deuxième convertisseur de puissance convertit le courant continu en courant alternatif et fournit le courant alternatif à l'alimentation commerciale,
au moins l'un du premier convertisseur de puissance (20 ; 200) et du troisième convertisseur de puissance (40 ; 400) comprend :

une branche d'unités de commutation comprenant deux unités de commutation (Q1, Q2, Q3, Q4) connectées en série, chacune des unités de commutation étant constituée d'un élément de commutation et d'une diode connectée en parallèle inverse à l'élément de commutation ; et

une branche de condensateurs connectée à la branche d'unités de commutation en parallèle et comprenant deux condensateurs connectés en série,

le circuit côté primaire ou le circuit côté secondaire est connecté à un point de connexion entre les deux unités de commutation de la branche d'unités de commutation et à un point de connexion entre les deux condensateurs de la branche de condensateurs, et

si le courant continu est converti en courant alternatif, ledit au moins un du premier convertisseur de puissance et du troisième convertisseur de puissance fonctionne alternativement dans des états fermé et ouvert dans les cycles correspondant à une fréquence prédéterminée conformément à des signaux de commande de MLI pour fonctionner en tant qu'onduleur en demi-pont, et si le courant alternatif est converti en courant continu, les éléments de commutation dans ledit au moins un du premier convertisseur de puissance et du troisième convertisseur de puissance sont ouverts, seules les diodes de rétroaction dans ledit au moins un du premier convertisseur de puissance et du troisième convertisseur de puissance fonctionnent et ledit au moins un du premier convertisseur de puissance et du troisième convertisseur de puissance fonctionne en tant que circuit de redressement doubleur de tension, et

un transfert de puissance bidirectionnel est effectué uniquement en commutant le fonctionnement du premier convertisseur de puissance, du deuxième convertisseur de puissance et du troisième convertisseur de puissance.

2. Système de transfert de puissance sans contact bidirectionnel selon la revendication 1, dans lequel le dispositif de transfert de puissance sans contact (30 ; 310) comprend un premier condensateur série (33) connecté à la première bobine (31) en série, un premier condensateur parallèle (34) connecté à la deuxième bobine (32) en parallèle, et une première inductance (35) connectée à la deuxième bobine en série.

3. Système de transfert de puissance sans contact bidirectionnel selon la revendication 1, dans lequel le dispositif de transfert de puissance sans contact (30 ; 310) comprend un deuxième condensateur parallèle (340) connecté à la première bobine en parallèle, une deuxième inductance (350) connectée à la première bobine en série, et un deuxième condensateur série (330) connecté à la deuxième bobine en série.

4. Système de transfert de puissance sans contact bidirectionnel selon la revendication 2 ou 3, dans lequel
une valeur Cs du premier ou du deuxième condensateur série (33 ; 330) est établie à

$$Cs \approx 1 / \{(2\pi f0)^2 \times L1\},$$

une valeur Cp du premier ou du deuxième condensateur parallèle (34 ; 340) est établie à

$$Cp \approx 1 / \{(2\pi f0)^2 \times L2\},$$

et
une valeur Ls de la première ou de la deuxième inductance série est établie à
$Ls \approx L2$, et dans lequel
f0 désigne une fréquence du courant alternatif généré par le premier convertisseur de puissance lorsque la puissance est transférée du circuit côté primaire au circuit côté secondaire dans le dispositif de transfert de puissance sans contact ainsi qu'une fréquence du courant alternatif généré par le troisième convertisseur de puissance lorsque la puissance est transférée du circuit côté secondaire au circuit côté primaire dans le dispositif de transfert de puissance sans contact,
L1 désigne une inductance propre de la bobine à laquelle le premier ou le deuxième condensateur série est connecté, et
L2 désigne une inductance propre de la bobine à laquelle le premier ou le deuxième condensateur parallèle est connecté.

5. Système de transfert de puissance sans contact bidirectionnel selon la revendication 4, dans lequel
la valeur Cs du premier ou du deuxième condensateur série (33 ; 330) est établie dans la plage de

$$Cs0 \times 0,7 \leq Cs \leq Cs0 \times 1,3,$$

la valeur cp du premier ou du deuxième condensateur parallèle (34 ; 340) est établie dans la plage de

$$Cp0 \text{ x } 0{,}7 \leq Cp \leq Cp0 \text{ x } 1{,}3,$$

et
la valeur Ls de la première ou de la deuxième inductance série est établie dans la plage de
$L2 \times 0.7 \leq Ls \leq L2 \times 1{,}3$, et dans lequel

$$Cs0 = 1 / \{(2\pi f0)^2 \text{ x } L1\} \text{ et } Cp0 = 1 / \{(2\pi f0)^2 \text{ x } L2\}.$$

**6.** Système de transfert de puissance sans contact bidirectionnel selon l'une quelconque des revendications 1 à 5, dans lequel
le troisième convertisseur de puissance est un onduleur du type à tension triphasée, et
un côté courant continu de l'onduleur du type à tension triphasée est connecté à l'alimentation en courant continu du corps mobile, et
un côté courant alternatif triphasé de l'onduleur du type à tension triphasée est connecté, par l'intermédiaire d'un commutateur, à un moteur électrique triphasé et au circuit côté secondaire du dispositif de transfert de puissance sans contact.

**7.** Système de transfert de puissance sans contact bidirectionnel selon la revendication 6, dans lequel
si l'onduleur du type à tension triphasée est connecté au moteur électrique triphasé par le commutateur, l'onduleur du type à tension triphasée fonctionne en tant qu'onduleur de MLI du type à tension triphasée, et
si l'onduleur du type à tension triphasée est connecté au circuit côté secondaire dans le dispositif de transfert de puissance sans contact par le commutateur, l'onduleur du type à tension triphasée fonctionne en tant qu'onduleur à onde rectangulaire monophasée qui délivre une onde rectangulaire monophasée.

FIG.1

# FIG.2

| | |
|---|---|
| freq[kHz] | 50 |
| Gap[mm] | 70 |
| $N_1$ | 20 |
| $N_2$ | 6 |
| $L_1[\mu H]$ | 146.7 |
| $L_2[\mu H]$ | 12.5 |
| $k$ | 0.382 |
| $C_S[\mu F]$ | 0.069 |
| $C_P[\mu F]$ | 0.810 |
| $L_S[\mu H]$ | 12.5 |

# FIG.3

| | G2V | V2G | SP |
|---|---|---|---|
| $R_L[\Omega]$ | 10.0 | 17.5 | 10.0 |
| $R_{Lmax}[\Omega]$ | 10.2 | 17.5 | 11.0 |
| $V_{IN1}[V]$ | 267.0 | 228.9 | 224.2 |
| $V_{IN2}[V]$ | 174.9 | 170.1 | 140.5 |
| $V_{OUT}/V_{IN}$ | 0.65 | 1.35 | 0.63 |
| $P_{IN1}[W]$ | 3257 | 3058 | 3279 |
| $P_{IN2}[W]$ | 3076 | 3228 | 3115 |
| $\eta[\%]$ | 94.4 | 94.8 | 95.0 |
| $\eta_{max}[\%]$ | 97.7 | 97.7 | 97.5 |

# FIG.4

# FIG.5

(a)

G2V

(b)

V2G

EP 2 814 136 B1

FIG.6

## FIG.7

FIG.8

# FIG.9

FIG.10

# FIG.11

# FIG.12

FIG.13

# FIG.14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011045195 A
- US 20090034300 A1
- CN 102025182 A

**Non-patent literature cited in the description**

- **NAYUKI ; FUKUSHIMA ; GIBO ; NEMOTO ; IKEYA.** Preliminary demonstrations of a bidirectional inductive power transfer system. *CRIEPI (Central Research Institute of Electric Power Industry) Research Report H10007,* 2011